(19) Europäisches Patentamt
European Patent Office
Office européen des brevets

(11) **EP 3 261 808 B1**

(12) **EUROPÄISCHE PATENTSCHRIFT**

(45) Veröffentlichungstag und Bekanntmachung des Hinweises auf die Patenterteilung:
**19.01.2022   Patentblatt 2022/03**

(21) Anmeldenummer: **16702919.8**

(22) Anmeldetag: **02.02.2016**

(51) Internationale Patentklassifikation (IPC):
**B25J 9/16** $^{(2006.01)}$

(52) Gemeinsame Patentklassifikation (CPC):
**B25J 9/1641; B25J 9/1628; B25J 9/1633;**
G05B 2219/39343; G05B 2219/39346;
G05B 2219/39347; G05B 2219/39348;
G05B 2219/39467

(86) Internationale Anmeldenummer:
**PCT/EP2016/052198**

(87) Internationale Veröffentlichungsnummer:
**WO 2016/134931 (01.09.2016 Gazette 2016/35)**

(54) **VORRICHTUNG UND VERFAHREN ZUR STEUERUNG UND REGELUNG EINES ROBOTER-MANIPULATORS**

DEVICE AND METHOD FOR PERFORMING OPEN-LOOP AND CLOSED-LOOP TO CONTROL OF A ROBOT MANIPULATOR

DISPOSITIF ET PROCÉDÉ POUR LA COMMANDE ET LA RÉGULATION D'UN ROBOT-MANIPULATEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.02.2015   DE 102015102642**

(43) Veröffentlichungstag der Anmeldung:
**03.01.2018   Patentblatt 2018/01**

(73) Patentinhaber: **Kastanienbaum GmbH**
**80538 München (DE)**

(72) Erfinder: **HADDADIN, Sami**
**30173 Hannover (DE)**

(74) Vertreter: **Rösler, Frank**
**Rösler · Rasch · van der Heide & Partner**
**Patent- und Rechtsanwälte PartG mbB**
**Bodenseestraße 18**
**81241 München (DE)**

(56) Entgegenhaltungen:
- **SIMEON P. PATARINSKI ET AL: "Robot force control: A review", MECHATRONICS., Bd. 3, Nr. 4, 1. August 1993 (1993-08-01), Seiten 377-398, XP055265127, GB ISSN: 0957-4158, DOI: 10.1016/0957-4158(93)90012-Q**
- **ANTÓNIO LOPES ET AL: "A force-impedance controlled industrial robot using an active robotic auxiliary device", ROBOTICS AND COMPUTER INTEGRATED MANUFACTURING., Bd. 24, Nr. 3, 1. Juni 2008 (2008-06-01), Seiten 299-309, XP055265134, GB ISSN: 0736-5845, DOI: 10.1016/j.rcim.2007.04.002**
- **CHRISTOPHER SCHINDLBECK ET AL: "Unified passivity-based Cartesian force/impedance control for rigid and flexible joint robots via task-energy tanks", 2015 IEEE INTERNATIONAL CONFERENCE ON ROBOTICS AND AUTOMATION (ICRA), 26. Mai 2015 (2015-05-26), Seiten 440-447, XP055265146, DOI: 10.1109/ICRA.2015.7139036 ISBN: 978-1-4799-6923-4**

• M. H. Raibert ET AL: "Hybrid Position/Force Control of Manipulators", Journal of Dynamic Systems, Measurement and Control, vol. 103, no. 2, 1 January 1981 (1981-01-01), pages 126-133, XP055309892, US ISSN: 0022-0434, DOI: 10.1115/1.3139652

**Beschreibung**

Die Erfindung betrifft eine Vorrichtung und ein Verfahren zur Steuerung und Regelung eines Roboter-Manipulators mit einem Endeffektor, der von einer Anzahl M Aktoren $AKT_m$ angetrieben wird, mit m = 1, 2, ..., M. Weiterhin betrifft die Erfindung ein Computersystem, mit einer Datenverarbeitungsvorrichtung, ein digitales Speichermedium, ein Computer-Programm-Produkt und ein Computer-Programm.

Es ist bekannt, dass Roboter-Manipulatoren den Menschen bei der Ausführung von Handhabungen in Hinblick auf wiederholbare Geschwindigkeit und Präzision übertreffen können. In Hinblick auf sensitive Kraftausübung und Nachgiebigkeit sind Menschen allerdings einem Roboter-Manipulator bei Handhabungen immer noch überlegen, was sich vor allem in realen Anwendungen zeigt, in denen Objekte sensitiv manipuliert oder zusammengesetzt werden müssen. Letzteres erfordert eine komplexe Koordination von Kontaktkräften und Bewegungsabläufen.

In diesem Zusammenhang ist die "Impedanzregelung" von Roboter-Manipulatoren bekannt. Das Konzept der Impedanzregelung von Roboter-Manipulatoren zielt darauf ab, das menschliche Verhalten durch eine aktive Regelung eines Roboter-Manipulators zu imitieren, bspw. auf Basis eines extern angeregten Masse-Feder-Dämpfer-Modells.

Im Allgemeinen kann eine gewollte Nachgiebigkeit von Roboter-Manipulatoren entweder durch eine aktive Regelung, durch ein Einsetzen von nachgiebigen Bauelementen in den Roboter-Manipulator oder eine Kombination von beidem erzeugt werden. Es ist weiterhin bekannt, dass es nicht möglich ist, eine arbiträre kartesische Nachgiebigkeit alleine mit ungekoppelten elastischen Gelenken zu schaffen (Albu-Schäffer, Fischer, Schreiber, Schoeppe, & Hirzinger, 2004), so dass eine passive Nachgiebigkeit eines Roboter-Manipulators immer mit einer aktiven Regelung kombiniert werden muss, um das Problem zu umgehen. Dadurch können Ungenauigkeiten in dem Objektmodell/Oberflächenmodell umgangen, definierte Kräfte auf die Umgebung ausgeübt und/oder Objekte manipuliert werden.

Weiterhin bekannt ist eine "aktive Interaktionsregelung". Eine aktive Interaktionsregelung kann unterteilt werden in eine "direkte" und eine "indirekte" Kraftregelung (Villani & De Schutter, 2008). Kürzlich wurden solche Kraftregler mit Variation der virtuellen Position eingeführt (Lutscher & Cheng, 2014 und Lee & Huang, 2010). Bekannt ist weiterhin eine Kraft-, Positions- und/oder Impedanzregelung unter vorgegebenen Zwangsbedingungen in unterschiedlichen Räumen (Borghesan & De Schutter, 2014).

In M. H. Raibert J. J. Craig, "Hybrid Position/Force Control of Manipulators", Journal of Dynamic Systems, Measurement and Control, 1981, wird ein Robotersystem unter Berücksichtigung des kombinierten Beitrags einer Kraft- und einer Positionssteuerung gesteuert.

Obwohl signifikante Fortschritte im Bereich der Roboter-Manipulator Regelung gemacht wurden, bestehen folgende Nachteile.

So erzeugt ein rein impedanzgeregelter Roboter-Manipulator gewünschte Kräfte entweder auf Basis einer reinen Vorsteuerung oder auf Basis einer entsprechenden Verschiebung einer virtuellen Sollposition eines Effektors des Roboter-Manipulators. Daher berücksichtigt diese Reglerklasse externe Kräfte nicht explizit, was aber erforderlich ist, wenn ein/e vorgegebene/s Kraft/Moment von einem Effektor des Roboter-Manipulators hinreichend exakt auf eine Umgebung/Objekt/Werkstück etc. ausgeübt werden soll. Weiterhin muss die Umgebung in Hinblick auf deren Geometrie und Nachgiebigkeitseigenschaften hinreichend exakt modelliert sein, damit dieser Regler-Ansatz funktioniert. Dies aber widerspricht der fundamentalen Idee der Impedanzregelung, in einer unmodellierten Umgebung zu funktionieren.

Weiterhin nachteilig bei einem rein impedanzgeregelten Roboter-Manipulator ist, dass wenn durch den Effektor des Roboter-Manipulators mittels der Vorsteuerung eine vorgegebene große Kraft auf ein Objekt (Umgebung) ausgeübt wird, bei Auftreten des Kontaktverlusts zwischen Effektor und Objekt eine potentiell gefährliche, instantane und große Bewegung (hinsichtlich des zurückgelegten Effektor-Weges, -Geschwindigkeit, und -Beschleunigung) vom Roboter-Manipulator ausgeführt wird. Dies wird bspw. bedingt durch eine von der Ist-Position des Effektors bei Kontaktverlust weit entfernte virtuelle Sollposition des Effektors.

Bekannt ist weiterhin eine "reine Kraftregelung" von Roboter-Manipulatoren. Eine Kraftregelung eines Roboter-Manipulators stellt die Grundlagen dar, um externe Kräfte hinreichend genau mit der Umgebung auszutauschen, und ermöglicht somit eine genaue Manipulation von Objekten bzw. deren Oberflächen. Diese Fähigkeit ist eine essentielle Notwendigkeit in industriellen Anwendungen von Roboter-Manipulatoren. Daher ist die eher unpräzise Impedanzregelung keine Alternative für eine Kraftregelung.

Diese Problematik hat zu vielfältigen Ansätzen der sogenannten hybriden Positions-Kraftregelung geführt (Raibert & Craig, 1981). Diese hybriden Positions-Kraftregelungen basieren auf der Idee, einen sogenannten Aufgabenraum ("Task Space") in komplementäre Kraft- und Positionsräume zu partitionieren, so dass Kraft bzw. Moment und Bewegungen in ihren eigenen Räumen ausgeübt und geregelt werden.

Ein Nachteil von bekannten hybriden Kraftregelungen besteht darin, dass diese eine sehr geringe Robustheit in Hinblick auf Kontaktverluste des Roboter-Manipulators mit einer Umgebung aufweisen. Des Weiteren muss auch hier eine Umgebung sehr genau modelliert sein, um eine gute Regelungs-Performanz sicherzustellen, was aber selten mit ausreichender Güte gegeben ist.

Um die Stabilität solcher Regler zu zeigen, wird die Umgebung typischerweise als ein einfaches Feder-Dämpfer-System modelliert. Eine Übersicht zu verschiedenen Kraftreglern einschließlich Kommentaren zu deren Stabilitätsanalyse kann in (Zeng & Hemami, 1997) gefunden werden. Eine sehr allgemeine Kritik an solchen Reglern ist in (Duffy, 1990) aufgeführt, denn oft wird eine falsche Wahl der Metrik oder des Koordinatensystems getroffen.

Die Aufgabe der Erfindung ist es, eine Vorrichtung und ein Verfahren zur Steuerung und zur Regelung eines von einer Anzahl M Aktoren $AKT_m$ angetriebenen Roboter-Manipulators mit einem Endeffektor, mit m = 1, 2, ..., M, anzugeben, welche die vorgenannten Nachteile weitestgehend vermeiden. Insbesondere sollen größere Bewegungen des Roboter-Manipulators nach einem Kontaktverlust des Endeffektors mit einem Objekt vermieden werden.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung, sowie der Erläuterung von Ausführungsbeispielen der Erfindung, die in den Figuren dargestellt sind.

Gemäß einem ersten Aspekt ist die Aufgabe durch eine Vorrichtung zur Steuerung und Regelung eines von einer Anzahl M Aktoren $AKT_m$ angetriebenen Roboter-Manipulators mit einem Endeffektor, mit m = 1, 2, ..., M gelöst. Der Begriff "Aktoren" ist weit gefasst zu verstehen. Er umfasst bspw. Elektromotoren, Hydraulikmotoren, Linearmotoren, Schrittmotoren, Piezoaktoren, usw.

Die Vorrichtung umfasst weiterhin eine erste Einheit, die einen auf den Endeffektor wirkenden externen Kraftwinder $\vec{F}_{ext}(t) = \{\vec{f}_{ext}(t), \vec{m}_{ext}(t)\}$ erfasst und/oder bereitstellt, mit $\vec{f}_{ext}(t) :=$ auf den Endeffektor wirkende externe Kraft und $\vec{m}_{ext}(t) :=$ auf den Endeffektor wirkendes externes Drehmoment. Die erste Einheit weist hierzu vorteilhaft ein Sensorsystem zur Erfassung des externen Kraftwinders $\vec{F}_{ext}(t) = \{\vec{f}_{ext}(t), m_{ext}(t)\}$ und/oder einen Schätzer zur Schätzung des externen Kraftwinders $\vec{F}_{ext}(t) = \{\vec{f}_{ext}(t), \vec{m}_{ext}(t)\}$ auf. Das Sensorsystem umfasst bevorzugt einen oder mehrere Kraftsensoren und/oder Drehmomentsensoren. Der Schätzer umfasst bevorzugt einen Prozessor zur Ausführung eines Programms zur Schätzung des Kraftwinders $\vec{F}_{ext}(t)$.

Weiterhin umfasst die vorgeschlagene Vorrichtung einen mit der ersten Einheit und den Aktoren $AKT_m$ verbundenen Regler. Der Regler wiederum umfasst einen ersten Regler R1, der ein Kraftregler ist, und einen damit verbundenen zweiten Regler R2, der ein Impedanzregler, ein Admittanzregler, ein Positionsregler, ein Geschwindigkeitsregler oder eine Kombination daraus ist, wobei der Regler Stellgrößen $u_m(t)$ ermittelt, mit denen die Aktoren $AKT_m$ derart ansteuerbar sind, dass der Endeffektor bei Kontakt mit einer Oberfläche eines Objekts auf dieses mit einem vorgegebenen Kraftwinder $\vec{F}_D(t) = \{\vec{f}_D(t), \vec{m}_D(t)\}$ einwirkt. Dabei gilt:

$$u_m(t) = u_{m,R1}(t) + u_{m,R2}(t) \tag{1}$$

mit $\vec{f}_D(t) :=$ vorgegebene Kraft; $\vec{m}_D(t) :=$ vorgegebenes Drehmoment, $u_{m,R1}(t):=$ Stellgrößenanteil des ersten Reglers R1, und $u_{m,R2}(t) :=$ Stellgrößenanteil des zweiten Reglers R2 und $t :=$ Zeit. Der vorgegebene Kraftwinder $\vec{F}_D(t)$ ergibt sich aus der dem Roboter gestellten Aufgabe.

Der erste Regler R1 ist dabei derart ausgeführt und eingerichtet, dass die Stellgröße $u_{m,R1}(t)$ als Produkt einer Stellgröße $u_{m,R1}(t)^*$ und einer Funktion $S(v(t))$ ermittelt wird, wobei gilt:

$$u_{m,R1}(t) = S(v(t))\, u_{m,R1}(t)^* \tag{2a}$$

$$v(t) = v(\vec{F}_D(t), \vec{R}(t)) \tag{3a}$$

$$v \in [v_a, v_e] \tag{4a}$$

mit: $u_{m,R1}^*(t):=$ eine vom ersten Regler R1 ermittelte Stellgröße zur Erzeugung des vorgegebenen Kraftwinders $\vec{F}_D(t)$; $\vec{R}(t):=$ eine bereitgestellte Regeldifferenz des Reglers, $S(v(t)):=$ eine monoton fallende Funktion von $v(t)$, die abhängig von $\vec{F}_D(t)$ und $\vec{R}(t)$ ist, $[v_a, v_e] :=$ eine vorgegebener Definitionsbereich der Variable $v(t)$, und $[v_{1a}, v_{1e}]$.

Die Erfindung zeichnet sich somit in einer Alternative dadurch aus, dass der Stellgrößenanteil des Kraftreglers R1 $u_{m,R1}(t)$, der herkömmlich ermittelt wird, mit einer monoton fallenden Funktion $S(v(t)) = S(v(\vec{F}_D(t), \vec{R}(t)))$ (sogenannte "Shaping-Funktion") multipliziert wird, was insgesamt dazu führt, dass bei Kontaktverlust des Endeffektors mit einer Umgebung größere Bewegungen des Roboter-Manipulators ausgeschlossen werden können. Der "Shaping"-Effekt kann in einer Alternative auch erzielt werden, wenn $u_{m,R1}(t)$ als Funktional $S^*(v(t), u_{m,R1}(t)^*)$ ermittelt wird. Damit werden erfindungsgemäße "Shaping"-Effekte erzielt, für all jene Auslegung des Kraftreglers, die sich mathematisch nicht als Produkt einer Stellgröße $u_{m,R1}(t)^*$ und einer Funktion $S(v(t))$ darstellen lassen. So können als Beispiel einzelne Komponenten eines PID-Reglers unterschiedliche jeweils monoton fallende Shaping-Funktion $S^*_1(v^*_1(t))$, $S^*_2(v^*_2(t))$, ... aufweisen.

Die Funktion $S(v(t))$ weist bevorzugt einen Wertebereich von [1, 0] auf, wobei im Fall des Kontaktes des Endeffektor mit der Umgebung (Normalbetrieb) $S(v(t)) = 1$ ist. Tritt ein Kontaktverlust des Endeffektors mit der Umgebung auf, dann tritt beim Regler gleichzeitig eine große Regeldifferenz $\vec{R}(t)$ auf. $S(v(t))$ wird vorzugsweise derart gewählt, dass je größer die Regeldifferenz $\vec{R}(t)$ und je größer der vom Endeffektor aufzubringende Kraftwinder $\vec{F}_D(t)$ ist, desto schneller fällt die Funktion $v(t)$ von Eins auf Null. Das gesagte ist analog auf $S^*(v^*(t))$ übertragbar.

Eine Weiterbildung der vorgeschlagenen Vorrichtung zeichnet sich dadurch aus, dass für den Fall, dass das Objekt (mit dem der Endeffektor in Kontakt ist und auf das er den Kraftwinder $\vec{F}_D(t)$ ausübt) elastisch und dessen Oberfläche flexibel ist, vom Regler bei der Ermittlung der Stellgrößen $u_m(t)$ vorgegebene Elastizitätseigenschaften des Objekts berücksichtigt werden.

Eine Weiterbildung der vorgeschlagenen Vorrichtung zeichnet sich dadurch aus, dass eine zweite Einheit vorhanden ist, die als Energiespeicher zur Passivierung des Reglers dient, und gemäß einer vorgegebenen Energiespeicherdynamik vom Regler kommende Energie T1 speichert und an den Regler Energie T2 abgibt, wobei die zweite Einheit und der Regler einen geschlossenen Regelkreis bilden, und eine Initialisierung der Einheit mit einer Energie T0 abhängig von einem ermittelten oder vorgegebenen Energieaufwand $E_{Aufwand}$ zur Durchführung einer aktuellen Aufgabe des Roboter-Manipulators ist. Dabei kann die von der zweiten Einheit gespeicherte Energie E eine virtuelle oder eine physikalische Energie sein. Im ersten Fall ist die virtuelle Energie lediglich eine Rechengröße. Im zweiten Fall ist die Energie eine physikalische Energie (bspw. elektrische Energie), wobei die zweite Einheit einen entsprechenden physikalischen Energiespeicher (bspw. eine Batterie) umfasst. Der zweite Fall der Weiterbildung ermöglicht somit nicht nur eine verbesserte d.h. passivierte Steuerung und Reglung des Roboter-Manipulators, sondern auch gleichzeitig eine Verringerung des Energieaufwandes beim Betrieb des Roboter-Manipulators.

Vorteilhaft ist bei der vorstehenden Weiterbildung eine Energieobergrenze G1 definiert, wobei die zweite Einheit derart ausgeführt und eingerichtet ist, dass für die in der zweiten Einheit gespeicherte Energie E stets gilt: $E \leq G1$. Weiterhin vorteilhaft ist eine Energieuntergrenze G2 mit: $0 < G2 < G1$ definiert, und die zweite Einheit derart ausgeführt, dass sofern für die in der zweiten Einheit gespeicherte Energie E gilt: $G2 < E \leq G1$, die zweite Einheit mit dem Regler gekoppelt ist, und $E \leq G2$, die zweite Einheit vom Regler abgekoppelt ist.

Ein weiterer Aspekt der Erfindung betrifft einen Roboter mit einem von einer Anzahl M Aktoren $AKT_m$ angetriebenen Roboter-Manipulator mit einem Endeffektor, der eine Vorrichtung, wie vorstehend erläutert aufweist, mit $m = 1, 2, ..., M$.

Ein weiterer Aspekt der Erfindung betrifft ein Verfahren zur Steuerung und Regelung eines von einer Anzahl M Aktoren $AKT_m$ angetriebenen Roboter-Manipulators mit einem Endeffektor, mit $m = 1, 2, ..., M$, mit folgenden Schritten: Erfassen und/oder Bereitstellen, eines auf den Endeffektor wirkenden externen Kraftwinders $\vec{F}_{ext}(t) = \{\vec{f}_{ext}(t), \vec{m}_{ext}(t)\}$, mit $\vec{f}_{ext}(t) :=$ auf den Endeffektor wirkende externe Kraft; $\vec{m}_{ext}(t) :=$ auf den Endeffektor wirkendes externes Drehmoment; mittels eines Reglers, der einen ersten Regler R1, der ein Kraftregler ist, und einen damit verbundenen zweiten Regler R2 umfasst, der ein Impedanzregler, ein Admittanzregler, ein Positionsregler, ein Geschwindigkeitsregler oder eine Kombination daraus ist, Ermitteln von Stellgrößen $u_m(t)$, mit denen die Aktoren $AKT_m$ derart angesteuert werden, dass der Endeffektor bei Kontakt mit einer Oberfläche eines Objekts auf dieses mit einem vorgegebenen Kraftwinder $\vec{F}_D(t) = \{\vec{f}_D(t), \vec{m}_D(t)\}$ einwirkt; wobei gilt:

$$u_m(t) = u_{m,R1}(t) + u_{m,R2}(t) \tag{1}$$

mit $\vec{f}_D(t) :=$ vorgegebene Kraft; $\vec{m}_D(t) :=$ vorgegebenes Drehmoment, $u_{m,R1}(t):=$ Stellgrößenanteil des ersten Reglers R1, und $u_{m,R2}(t) :=$ Stellgrößenanteil des zweiten Reglers R2, wobei der erst Regler R1, derart ausgeführt und eingerichtet ist, dass die Stellgröße $u_{m,R1}(t)$ als Produkt einer Stellgröße $u_{m,R1}(t)^*$ und einer Funktion $S(v(t))$ oder als Funktional $S^*(v^*(t), u_{m,R1}(t)^*)$ ermittelt wird, wobei gilt:

$$u_{m,R1}(t) = S(v(t))\, u_{m,R1}(t)^* \tag{2a}$$

$$u_{m,R1}(t) = S^*(v^*(t), u_{m,R1}(t)^*) \tag{2b}$$

$$v(t) = v(\vec{F}_D(t), \vec{R}(t)) \tag{3a}$$

$$v \in [v_a, v_e] \tag{4a}$$

mit: $u_{m,R1}{}^*(t)$:= eine vom ersten Regler R1 ermittelte Stellgröße zur Erzeugung des vorgegebenen Kraftwinders $\vec{F}_D(t)$; $\vec{R}(t)$:= eine bereitgestellte Regeldifferenz des Reglers, S(v(t)):= eine monoton fallende Funktion von v(t), die abhängig von $\vec{F}_D(t)$ und $\vec{R}(t)$ ist, $[v_a, v_e]$ := eine vorgegebener Definitionsbereich der Variable v(t), und $[v_{1a}, v_{1e}]$.

Vorzugsweise werden bei dem Verfahren für den Fall, dass das Objekt elastisch und damit dessen Oberfläche flexibel ist, vom Regler bei der Ermittlung der Stellgrößen $u_m(t)$ vorgegebene Elastizitätseigenschaften des Objekts berücksichtigt.

Weiterhin vorzugsweise ist eine zweite Einheit vorhanden, die als Energiespeicher zur Passivierung des Reglers dient, und gemäß einer vorgegebenen Energiespeicherdynamik vom Regler kommende Energie T1 speichert und an den Regler Energie T2 abgibt, wobei die zweite Einheit und der Regler einen geschlossenen Regelkreis bilden, und eine Initialisierung der Einheit mit einer Energie T0 abhängig von einem ermittelten oder vorgegebenen Energieaufwand $E_{Aufwand}$ zur Durchführung einer aktuellen Aufgabe des Roboter-Manipulators ist.

Vorteile und bevorzugte Weiterbildungen des vorgeschlagenen Verfahrens ergeben sich durch eine analoge und sinngemäße Übertragung der vorstehenden Ausführungen zur vorgeschlagenen Vorrichtung.

Ein weiterer Aspekt der Erfindung betrifft ein Computersystem, mit einer Datenverarbeitungsvorrichtung gemäß Anspruch 12, sowie ein digitales Speichermedium mit elektronisch aus lesbaren Steuersignalen gemäß Anspruch 13.

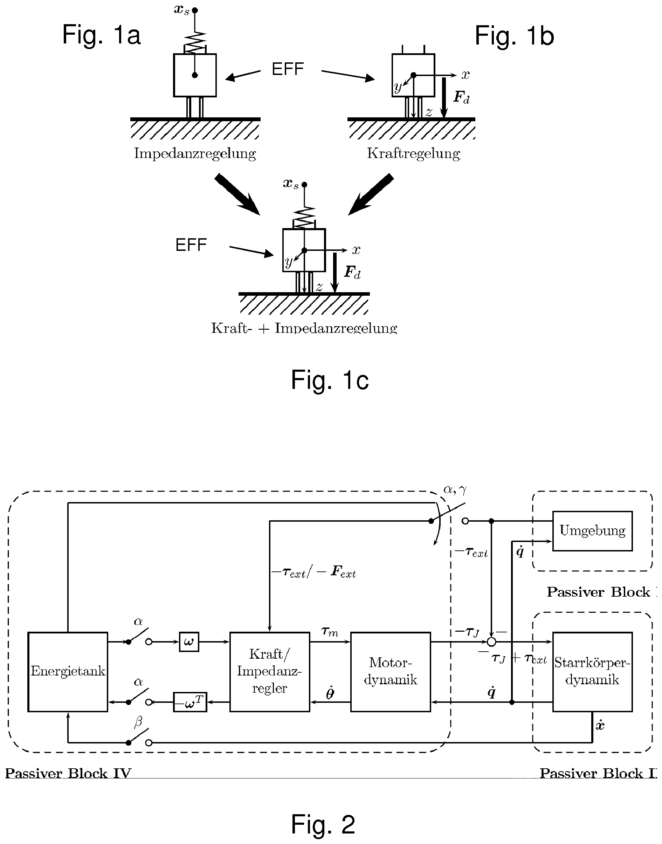

Die vorgeschlagene Vorrichtung und das vorgeschlagene Verfahren zur Steuerung und Regelung eines von einer Anzahl M Aktoren $AKT_m$ angetriebenen Roboter-Manipulators mit einem Endeffektor, mit m = 1, 2, ..., M beruht mithin auf einem robusten passivitätsbasierten Ansatz durch Kombination einer Kraftregelung mit einer Impedanzregelung (vgl. Fig. 1) und mit Energietanks. Die Erfindung ermöglicht es, arbiträre passive Umgebungen anzunehmen und hat daher keine Notwendigkeit für Variationen der virtuellen Sollposition, die ein eher unrobustes Verhalten aufweisen. Die Erfindung erlaubt eine robuste, nachgiebige und stabile Manipulation einer Umgebung durch einen Roboter-Manipulator, ohne dass zwischen Kraft- oder Impedanzregelung gewählt werden muss. Des Weiteren wird der beschriebene inhärente Nachteil der Kraft- und Impedanzregelung beseitigt und die Vorteile der Kraftregelung und der Impedanzregelung bestmöglich kombiniert. Insbesondere werden gefährliche Bewegungen des Roboter-Manipulators, die durch Kontaktverlust des Endeffektors mit der Umgebung entstehen, verhindert.

Die nachfolgenden Ausführungen erläutern die Erfindung im Detail hinsichtlich folgender Themen: A) Roboter-Modellierung, B) Reglerentwurf, C) Stabilisierung von Kontaktverlusten, und D) Handhabung von flexiblen und stark nachgiebigen Objekten.

**A Roboter-Modellierung**

**A1 Starrkörperdynamik**

Die bekannte Dynamik eines starren Roboter-Manipulators mit n Gelenken (degrees of freedom, DOF) ist gegeben durch:

$$M(q)\ddot{q} + C(q,\dot{q})\dot{q} + g(q) = \tau_m + \tau_{ext} \tag{5}$$

wobei $q \in R^n$ die Gelenkposition ist. Die Massenmatrix ist gegeben durch $M(q) \in R^{n \times n}$, der Coriolis und Zentrifugal-Vektor durch $C(q,\dot{q})\dot{q} \in R^n$, und der Gravitationsvektor durch $g(q) \in R^n$. Der Steuerungseingang des Systems ist das Motordrehmoment $\tau_m \in R^n$, wobei $\tau_{ext} \in R^n$ alle extern eingeprägten Drehmomente umfasst. Reibung ist hierbei zur Vereinfachung der Darstellung vernachlässigt. Externe Kräfte sind im kartesischen Raum gegeben durch den Vektor

$$F_{ext} := (f_{ext}^T, m_{ext}^T)^T \in R^6,$$

, welcher einen Kraft-Momentenvektor darstellt. Dieser kann mittels der transponierten Jacobi-Matrix $J^T(q)$ zu externen Gelenkdrehmomenten abgebildet werden mittels $\tau_{ext} = J^T(q)F_{ext}$.

**A2 Dynamik von flexiblen Gelenken**

Für Leichtbau-Roboter-Manipulatoren oder solchen mit Federn in den Gelenken ist die Annahme (5) nicht hinreichend genau, um die inhärente Dynamik, die durch die Präsenz von flexiblen Strukturen wie dem Getriebe entsteht, zu beschreiben. Daher wird das (reduzierte) Modell für Roboter-Manipulatoren mit elastischen Gelenken für solche Strukturen angenommen. Dieses kann beschrieben werden durch (Spong, 1987)

$$M(q)\ddot{q} + C(q,\dot{q})\dot{q} + g(q) = \tau_J + \tau_{ext} \tag{6}$$

$$B\ddot{\theta} + \tau_J = \tau_m \tag{7}$$

$$\tau_J = K(\theta - q) \tag{8}$$

wobei $\theta \in R^n$ die Motorposition ist. Die Gleichungen (6) und (7) beschreiben jeweils die abtriebs- und antriebsseitige Dynamik. Die Gleichung (8) koppelt (6) und (7) durch das Gelenkmoment $\tau_J \in R^n$, welches als lineares Federmoment angenommen wird. Dies ist für einen Fachmann leicht auf nichtlineare Gelenkfedern zu erweitern. Die Dämpfung in den Gelenken sei hier vernachlässigt, denn die Erweiterung ist trivial und wird daher hier nicht berücksichtigt. Die Matrizen $K \in R^{n \times n}$ und $B \in R^{n \times n}$ sind beide konstante, positiv definite Diagonalmatrizen, die jeweils die Gelenksteifigkeit und Motorträgheit bezeichnen. Auch hier wird keine antriebs- oder abtriebsseitige Reibung berücksichtigt.

**B Realerentwurf**

**B1 Kartesischer Impedanzrealer**

Eine stabile Impedanzregelung von Roboter-Manipulatoren mit elastischen Gelenken kann durch eine geschickte Passivierung des Systems erlangt werden. Dies wird bspw. dadurch erreicht, indem die Positionsrückführung als Funktion von $\theta$ anstatt von $\theta$ und $q$ erfolgt. Dafür wird $q$ mit seinem statischen Äquivalent $\bar{q}(\theta) = \zeta^{-1}(\theta)$ ersetzt, welches numerisch durch einen Kontraktion mit der impliziten Funktion $\zeta(q_e) = q_e + K^{-1}g(q_e)$ erreicht wird, wobei $q_e$ die abtriebsseitige Position des Equilibriumpunktes ist. Unter schwachen Voraussetzungen kann $\bar{q}(\theta)$ als ein Schätzer für $q$ benutzt werden. Für mehr Details über die implizite Funktion $\zeta$ als auch zu der zugrunde liegenden Theorie, sei auf (Albu-Schäffer, Ott, & Hirzinger, A Unified Passivity-based Control Framework for Position, Torque and Impedance Control of Flexible Joint Robots, 2007) verwiesen. Das passivitäts-basierte Regelgesetz der Impedanzregelung für Roboter-Manipulatoren mit flexiblen Gelenken kann nun wie folgt formuliert werden:

$$\tau_{mi} = -J^T(q)(K_x \tilde{x}(\bar{q}(\theta)) + D_x \dot{x}) \tag{9}$$

$$\tilde{x}(\theta) = \tilde{x}(\bar{q}(\theta)) = f(\bar{q}(\theta)) - x_s = x(\theta) - x_s \tag{10}$$

**B2 Kartesischer Kraftrealer**

Der Reglerentwurf basiert auf einem kartesischen Kraftregler:

$$\tag{11}$$

$$\tau_{mf} = J^T(\bar{q})\left((K_p - I)(F_{ext}(t) - F_d(t)) + K_d\left(\dot{F}_{ext}(t) - \dot{F}_d(t)\right) + K_i \int_0^t F_{ext}(t) - F_d(t)\, d\sigma\right)$$

wobei $K_d \in R^{6 \times 6}$ und $K_i \in R^{6 \times 6}$ jeweils diagonale, positiv definite Matrizen sind für den differentiellen und integralen Regleranteil. $I \in R^{6 \times 6}$ bezeichnet die Identitätsmatrix und die Matrix $K_p \in R^{6 \times 6}$ sei so gewählt, dass $K_p - I$ auch diagonal

und positiv definit ist. Die gewünschte Kraft $F_d := (f_d^T, m_d^T)^T$ auf die Umgebung ist durch den Anwender oder einen entsprechenden Planer vorgegeben. Es sei weiterhin definiert: $h_i(F_{ext}(t), t) := K_i \int_0^t F_{ext}(t) - F_d(t)\, d\sigma$, um die Lesbarkeit im Folgenden zu verbessern. $F_{ext}$ kann entweder durch einen Kraftsensor oder durch einen Beobachter gewonnen werden (Haddadin, Towards Safe Robots: Approaching Asimov's 1st Law, 2013). Soll der Kraftregler auf einen starren Roboter angewendet werden, wird $\tau_m = \tau_{mf}$ in (5) eingesetzt und für Roboter mit flexiblen Gelenken in (7) eingesetzt.

### B3 Vereinheitlicher Kraft- und Impedanzrealer

Eine einfache Kombination der vorstehenden Kraft- und Impedanzregler führt zu folgendem Regelgesetz:

$$\tau_m = -J^T(q)\left( (K_p - I)(F_{ext}(t) - F_d(t)) + K_d\left(\dot{F}_{ext}(t) - \dot{F}_d(t)\right) + K_i h_i + K_x \tilde{x}(\bar{q}(\theta)) + D_x \dot{x}\right). \tag{12}$$

Allerdings lässt sich damit die Stabilität nicht garantieren. Daher muss der Regler mit einem Energietank augmentiert werden (vgl. Fig. 2), so dass die Passivität und damit wiederum die Stabilität des Systems gewährleistet wird. Somit entsteht ein neues Regelgesetz:

$$\tau_m = -J^T(q)\left( \gamma K_d\left(\dot{F}_d(t) - \dot{F}_{ext}(t)\right) - \omega x_t + K_x \tilde{x}(\bar{q}(\theta)) + D_x \dot{x}\right), \tag{13}$$

wobei $x_t$ der Zustand des Energietanks ist und $\omega$ definiert ist durch

$$\omega = \frac{\alpha}{x_t}\left( K_p F_d + (1 - \gamma)K_d\left(\dot{F}_d(t) - \dot{F}_{ext}(t)\right) - K_i h_i\right). \tag{14}$$

Die Dynamik des Energietanks kann beschrieben werden durch:

$$\dot{x}_t = \frac{\beta}{x_t}\left( \dot{x}^T D_x \dot{x} + \gamma \dot{x}^T K_d\left(\dot{F}_d(t) - \dot{F}_{ext}(t)\right)\right) + u_t \tag{15}$$

Der Eingang des Energietanks ist hier mit $u_t$ bezeichnet. Die binären Skalare $\alpha, \beta, \gamma$ garantieren immer die Stabilität des Gesamtsystems.

### B4 Aufgaben-basierte Initialisierung

Um die Aufgabenenergie (Taskenergie) zu berechnen, wird das statische Kräftegleichgewicht $f_l|_{x=x_w} + f_d = f_w$ genutzt, wobei $f_1 = K_{x,t}(p - p_s)$ und $f_w = K_{W,t}(p_w - p_{w,0})$ jeweils die Kräfte für die Impedanzsteifigkeit und Gegenkraft der Umgebung sind. Die Gegenkraft, die durch eine Oberfläche eines Objekts generiert wird, ist hier modelliert als eine lineare Funktion in der Steifigkeit ohne die Berücksichtigung der Dämpfung. Durch Auflösen nach $p_w$ erhält man die Position der Oberfläche, nachdem die Kraft reguliert wurde. Die erforderliche Arbeit, um diese Oberfläche zu verschieben kann berechnet werden als:

$$E_T = \int_0^t \frac{1}{2}\left( p_W(\sigma) - p_{W,0}\right)^T K_{w,t}\left( p_W(\sigma) - p_{W,0}\right) d\sigma \tag{16}$$

Hier wird nur die translatorische Energie berücksichtigt. Natürlich ist eine Erweiterung für rotatorische Fälle erforderlich, was aber für einen Fachmann unproblematisch möglich ist.

Für den speziellen Regulierungsfall $f_d$ = konst. berechnen sich die Taskenergie als:

$$E_T = \frac{1}{2}\left(p_W - p_{W,0}\right)^T K_{w,t}\left(p_W - p_{W,0}\right)$$

(17)

Die Taskenergie wird dementsprechend initialisiert.

## C Stabilisierung von Kontaktverlusten

Die Stabilität der Steuerung und Regelung des Roboter-Manipulators ist für alle erdenklichen Fälle gewährleistet, aber das heißt nicht automatisch, dass der Roboter-Manipulator ausschließlich sichere Bewegungen ausführt. Ein unerwarteter Kontaktverlust des Endeffektors mit einer Oberfläche eines Objekts würde immer noch dazu führen, dass der Roboter mit dem Roboter-Manipulator versucht eine Kraft auszuregeln bis der Energietank leer ist. Je nach verbleibender Energie im Energietank kann dies auch zu großen, schnellen und insbesondere ungewünschten Bewegungen des Roboter-Manipulators führen.

Um dies zu vermeiden, könnte man vorschlagen, dass der Regler einfach deaktiviert wird, sobald kein Kontakt zwischen dem Endeffektor und der Umgebung/dem Objekt mehr detektiert wird. Allerdings führt dies zu einem ungewollten Schaltverhalten aufgrund von z.B. Sensorrauschen.

Um dem zu begegnen, wird hier eine robuste positions-basierte Methode vorgeschlagen, die eine reglerformende Funktion S(v):= $\rho(\psi)$ benutzt, die in den Regler integriert wird. Sie lautet vorliegend:

$$\rho(\psi) = \left(\rho_t(\psi), \rho_t(\psi), \rho_t(\psi), \rho_r(\psi), \rho_r(\psi), \rho_r(\psi)\right)^T$$

und besteht aus einem translatorischem und rotatorischem Anteil, jeweils definiert als

$$\rho_t(\psi) := \begin{cases} 1 & falls \quad f_d^T \Delta p \geq 0 \\ \frac{1}{2}\left[1 + \cos\left(\frac{\psi - \|\Delta p\|}{d_{max}}\pi\right)\right] & falls \ f_d^T \Delta p < 0 \wedge \psi \in \left[\|\Delta p\|, \|\Delta p\| + d_{max}\right] \\ 0 & sonst \end{cases}$$

und

$$\rho_r(\psi) := \begin{cases} 1 & falls \quad m_d^T \Delta k_0 \Delta k_v \geq 0 \\ \frac{1}{2}\left[1 + \cos\left(\frac{\psi - \Delta\varphi}{\varphi_{max}}\pi\right)\right] & falls \ m_d^T \Delta k_0 \Delta k_v < 0 \wedge \psi \in \left[\Delta\varphi, \Delta\varphi + \varphi_{max}\right] \\ 0 & sonst. \end{cases}$$

Die Funktion $\rho(\psi)$ in diesem Beispiel entspricht der vorstehenden Funktion S(v). $\psi$ entspricht der Reglerabweichung $\vec{R}(t)$.

Eine Roboterpose $x := (p^T, \varphi^T)^T$ bestehe aus einem translatorischem Anteil $p$ und einer geeigneten rotatorischen Repräsentation, wie z.B. einem Euler-Winkel $\varphi$. $\Delta p = p_s - p$ sei der Vektor der vom Endeffektor zur virtuellen Sollposition zeigt und $F_d := \left(f_d^T, m_d^T\right)^T$ sei der gewünschte 6-dimensionale Kraftwinder (vgl. Fig. 2). Sobald $\Delta p$ und $f_d$ einen Winkel größer als 90° einschließen, sollte der Regler deaktiviert werden.

Um einen glatten Übergang zu gewährleisten wird eine interpolierende Funktion $\rho_t(\psi)$ gewählt, die in einer benutzerdefinierten Region $d_{max}$ interpoliert. Für den rotatorischen Anteil $\rho_r(\psi)$ werden Quaternionen als singularitätsfreie Darstellung gewählt. Das Einheitsquaternion $k = (k_0, k_v)$ bezeichne die aktuelle Orientierung und das Quaternion $k_s = (k_{0,s}, k_{v,s})$ die gewünschte Orientierung.

Der Rotationsfehler ist dann definiert als $\Delta k := k^{-1} k_s$ und $\Delta\varphi := 2arccos(\Delta k_0)$. Die benutzerdefinierte Region,

die eine Robustheit darstellt, kann durch einen Winkel $\varphi_{max}$ angegeben werden, welcher eine Beziehung zu einer skalaren Komponente des Quaternions durch $\varphi_{max} := 2arccos(k_{0,max})$ darstellt. Aus der Sicht der Stabilitätsanalyse kann diese formende Funktion interpretiert werden als eine Formung von $\omega$, die nur den Kraftregler des kombinierten Kraft- und Impedanzreglers skaliert. Daher kann $\omega$ neu definiert werden als $\omega_\varphi := \rho(\psi)\,\omega$ und die Stabilität ist wieder gewährleistet. Die Multiplikation von $\rho(\psi)$ erfolgt hier komponentenweise.

### D) Handhabung von flexiblen und stark nachgiebigen Objekten

Wenn zur Regelung eine positions-basierte Methode benutzt wird, wie sie im vorigen Kapitel vorgestellt wurde, muss beachtet werden, dass weiche und deformierbare Materialien eine speziellen Behandlung benötigen. Eine Planung der virtuellen Sollposition ohne die Nachgiebigkeit oder Deformation der Umgebung zu beachten, führt unter Umständen zu dem Problem, dass der Kraftregler ungewollt deaktiviert oder skaliert wird. Dies ist dadurch bedingt, dass aktuell aufgrund der Nachgiebigkeit eine andere Ist-Position vorhanden ist als ohne Nachgiebigkeit. Daher wird eine korrektive virtuelle Sollposition $x'_d = (p'^T_d, \varphi'^T_d)^T$ eingeführt, um die virtuelle Sollposition des Reglers für solche flexiblen und stark nachgiebigen Materialien anzupassen. $K_{mat}$ bezeichne im Folgenden die angenommene (jedoch nicht notwendigerweise bekannte) Steifigkeit der zu behandelnden Oberfläche oder Objektes. Ein quasi-statisches Korrekturgesetz lautet daher:

$$\begin{pmatrix} p'_d \\ \varphi'_d \end{pmatrix} = \begin{pmatrix} p_d \\ \varphi_d \end{pmatrix} - \begin{bmatrix} K_{t,mat} & K_{tr,mat} \\ K_{rt,mat} & K_{r,mat} \end{bmatrix}^{-1} \begin{pmatrix} f_d \\ m_d \end{pmatrix} \tag{18}$$

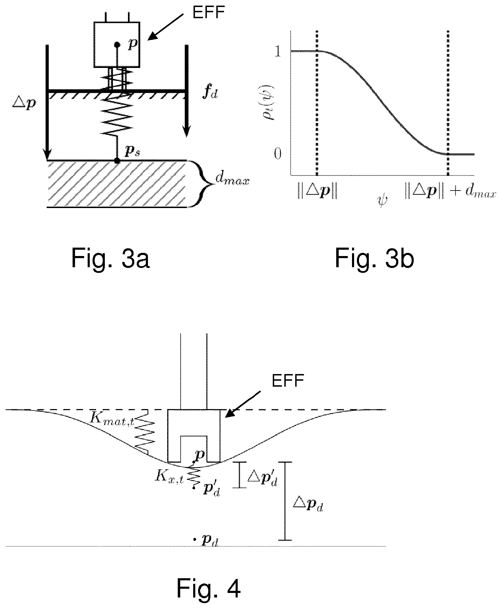

oder kürzer $x'_d = x_d - K^{-1}_{mat} F_d$ . Man sieht, dass die virtuelle Sollposition derart verschoben wird, dass die durch das weiche/elastische Material entstehende Abweichung entsprechend korrigiert wird (vgl. Fig. 4). Natürlich muss für diese Methode die Umgebungssteifigkeit bekannt sein oder zumindest geschätzt werden. Aus Gleichung (18) wird aber intuitiv klar, dass für $K \rightarrow \infty$ der vorherige Fall erreicht ist. Natürlich kann das Gesetz auch so erweitert werden, dass auch eine Dämpfung der Umgebung berücksichtigt wird. Dies erschwert allerdings die Berechnungen.

Literaturverzeichnis:

Albu-Schäffer, A., Fischer, M., Schreiber, G., Schoeppe, F., & Hirzinger, G. (2004). Soft robotics: What Cartesian stiffness can obtain with passively compliant, uncoupled joints. IROS.

Albu-Schäffer, A., Ott, C., & Hirzinger, G. (2007). A Unified Passivity-based Control Framework for Position, Torque and Impedance Control of Flexible Joint Robots. The Int. J. of Robotics Research, (S. 23-39).

Antonio Lopes et al., (2008) "A force-impedance controlled industrial robot using an active robotic auxiliary device", in ROBOTICS AND COMPUTER INTEGRATED MANUFACTURING, Vol. 24, No. 3, 1 June 2008

Borghesan, G., & De Schutter, J. (2014). Constraint-based specification of hybrid position-impedance-force tasks. IEEE International Conference on Robotics and Automation 2014 (ICRA2014).

Cervera, J., Van Der Schaft, A., & Banos, A. (2007). Interconnection of port-Hamiltonian systems and composition of Dirac structures. Automatica (S. 212--225). Elsevier.Duffy, J. (1990). The fallacy of modern hybrid control theory that is based on orthogonal complements of twist and wrench spaces. (S. 139--144). Wiley Online Library.

Duindam, V., & Stramigioli, S. (2004). Port-based asymptotic curve tracking for mechanical systems. (S. 411 - 420). Elsevier.

Haddadin, S. (2013). Towards Safe Robots: Approaching Asimov's 1st Law. Springer Publishing Company, Incorporated.

Haddadin, S., Albu-Schäffer, A., De Luca, A., & Hirzinger, G. (2008). Collision detection and reaction: A contribution to safe physical human-robot interaction. Intelligent Robots and Systems (S. 3356--3363). IEEE.

Hogan, N. (1985). {Impedance Control: An approach to manipulation: Part I -Theory, Part II - Implementation, Part III - Applications. ASME Journal of Dynamic Systems, Measurement, and Control, (S. 1-24).

Lee, D., & Huang, K. (2010). Passive-set-position-modulation framework for interactive robotic systems. IEEE Transactions on Robotics (S. 354--369). IEEE.

Lutscher, E., & Cheng, G. (2014). Constrained Manipulation in Unstructured Environment Utilizing Hierarchical Task Specification for Indirect Force Controlled Robots. IEEE International Conference on Robotics and Automation 2014 (ICRA2014).

Raibert, M. H., & Craig, J. J. (1981). Hybrid position/force control of manipulators. ASME Journal of Dynamical Systems, Measurement and Control, (S. 126-133).

Spong, M. (1987). Modeling and Control of Elastic Joint Robots. ASME J. on Dynamic Systems, Measurement, and Control, (S. 310-319).

Simeon P. Patarinski et al.(1993), "Robot force control: A review", in MECHANTRONICS Vol. 3 No. 4, 1 Aug. 1993, Seiten 377-398,

Villani, L., & De Schutter, J. (2008). Force Control. In O. Khatib, Springer Handbook of Robotics (S. 161--185). Springer.

Zeng, G., & Hemami, A. (1997). An overview of robot force control. Robotica (S. 473 - 482). Cambridge Univ Press.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Gleiche, ähnliche und/oder funktionsgleiche Teile sind mit gleichen Bezugszeichen versehen.

Es zeigen:

Fig. 1a-c     ein konzeptionelles vereinfachtes Schema zur Darstellung eines vorgeschlagenen Hybrid Reglers mit einem Impedanzregler und einem Kraftregler,

Fig. 2     eine modellhafte Systemdarstellung zur Regelung und Steuerung eines Roboter-Manipulators, der mit einer Umgebung interagiert,

Fig. 3a     einen schematisiert dargestellten impedanzgeregelten Roboter-Manipulator mit einem Endeffektor EFF und einer vorgegebenen translatorischer Robustheitsregion $d_{max}$,

Fig. 3b:     eine reglerformende Funktion $\rho(\psi) = S(v(t))$ für den translatorischen Fall,

Fig. 4     ein Schaubild zur Deformierung von elastischem Material durch angewendeten Druck des Endeffektors im translatorischen Fall,

Fig. 5     einen schematisierten Aufbau einer vorgeschlagenen Vorrichtung, und

Fig. 6     einen schematisierten Ablaufplan eines vorgeschlagenen Verfahrens.

**Fig. 1** zeigt ein konzeptionelles vereinfachtes Schema zur Darstellung eines vorgeschlagenen Hybrid Reglers mit einem Impedanzregler und einem Kraftregler. Dämpfer sind der Übersichtlichkeit halber nicht gezeigt. Die **Fig. 1a** zeigt einen rein impedanzgeregelten Roboter-Manipulator mit Endeffektor EFF. Die Impedanzregelung wird durch die dargestellte Feder angedeutet. Die **Fig. 1b** zeigt einen rein kraftgeregelten Roboter-Manipulator mit Endeffektor EFF, der mit einer vorgegebenen Kraft $F_d$ gegen eine Objektoberfläche (Linie schraffiert) drückt. Die **Fig. 1c** zeigt eine erfindungsgemäße Kombination des Kraftreglers und des Impedanzregler aus Fig. 1a und Fig. 1b.

**Fig. 2** zeigt eine modellhafte Systemdarstellung zur Regelung und Steuerung eines erfindungsgemäßen Roboter-Manipulators mit Endeffektor, der mit einer Umgebung/Objekt/Werkstück etc. interagiert. Dargestellt als funktionale Blöcke sind die Umgebung (=: "Umgebung"), welche mit dem Roboter-Manipulator (=: "Starrkörperdynamik") und den Aktoren (:= "Motordynamik") wechselwirkt. Die Steuerung und Regelung der Aktoren erfolgt mittel eines Reglers (=: "Kraft-/Impedanzregler"), an den ein Energietank (=: "Energietank") koppelbar ist. Gezeigt sind die Verbindungen und Rückführungs-Verbindungen der miteinander verschalteten Blöcke mit den entsprechenden Ein-/Ausgängen und ausgetauschten Größen. Durch Entkoppeln des Reglers vom Energietank für den Fall, dass die Passivität des Reglers verletzt ist, wird eine Rückführung der externen Kräfte annulliert.

**Fig. 3a** zeigt einen schematisiert dargestellten impedanzgeregelten Roboter-Manipulator mit einem Endeffektor EFF und einer vorgegebenen translatorischer Robustheitsregion $d_{max}$. $\Delta p = p_s - p$ gibt den Vektor an, der von der Endeffektor-Position p zu dem einem Set-Punkt $p_s$ zeigt, wobei der $f_d$ den vorgegebenen Kraftwinder angibt.

**Fig. 3b** zeigt eine reglerformende Funktion $\rho(\psi) = S(v(t))$ für den translatorischen Fall. Nähere Ausführungen zu der Funktion $\rho(\psi)$ finden sich in der vorstehenden Beschreibung (vgl. Teil: "C Stabilisierung von Kontaktverlusten").

**Fig. 4** zeigt ein Schaubild zur Deformierung von elastischem Material durch angewendeten Druck des Endeffektors EFF im translatorischen Fall, das die vorstehende Beschreibung (vgl. Teil "D Handhabung von flexiblen und stark nachgiebigen Objekten) näher erläutert.

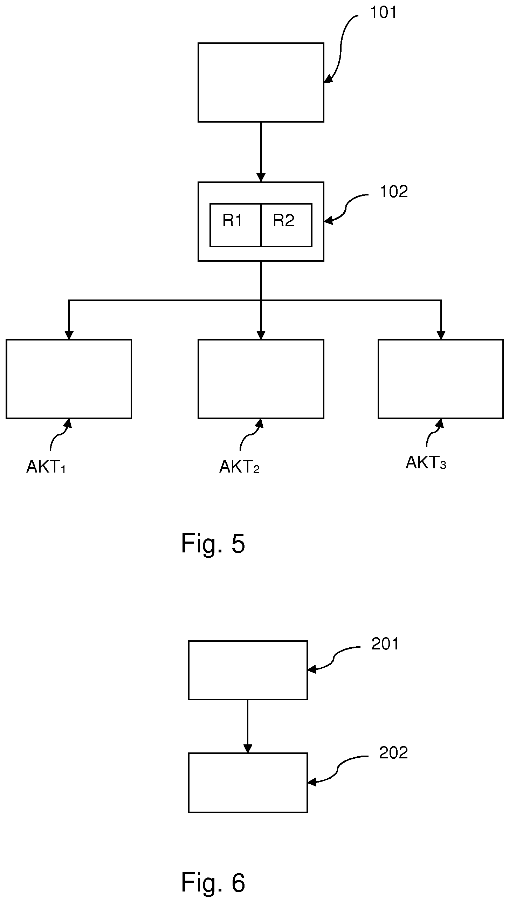

**Fig. 5** zeigt einen schematisierten Aufbau einer vorgeschlagenen Vorrichtung zur Steuerung und Regelung eines von drei Aktoren $AKT_m$ angetriebenen Roboter-Manipulators mit einem Endeffektor, mit m = 1, 2, 3. Die Vorrichtung umfasst eine erste Einheit **101,** die einen auf den Endeffektor wirkenden externen Kraftwinder $\vec{F}_{ext}(t) = \{\vec{f}_{ext}(t), \vec{m}_{ext}(t)\}$ erfasst und/oder bereitstellt, mit $\vec{f}_{ext}(t) :=$ auf den Endeffektor wirkende externe Kraft; $\vec{m}_{ext}(t) :=$ auf den Endeffektor wirkendes externes Drehmoment; einen mit der ersten Einheit **101** und den Aktoren $AKT_m$ verbundenen Regler **102,** der einen ersten Regler **R1,** der ein Kraftregler ist, und einen damit verbundenen zweiten Regler **R2** umfasst, der ein Impedanzregler ist, wobei der Regler **102** Stellgrößen $u_m(t)$ ermittelt, mit denen die Aktoren $AKT_m$ derart ansteuerbar sind, dass der Endeffektor bei Kontakt mit einer Oberfläche eines Objekts auf dieses mit einem vorgegebenen Kraftwinder $\vec{F}_D(t) = \{\vec{f}_D(t), \vec{m}_D(t)\}$ einwirkt; wobei gilt: $u_m(t) = u_{m,R1}(t) + u_{m,R2}(t)$, mit: $\vec{f}_D(t) :=$ vorgegebene Kraft; $\vec{m}_D(t) :=$ vorgegebenes Drehmoment, $u_{m,R1}(t):=$ Stellgrößenanteil des ersten Reglers R1, und $u_{m,R2}(t):=$ Stellgrößenanteil des zweiten Reglers R2, wobei der erst Regler R1, derart ausgeführt und eingerichtet ist, dass die Stellgröße $u_{m,R1}(t)$ als Produkt einer Stellgröße $u_{m,R1}(t)^*$ und einer Funktion $S(v(t))$ ermittelt wird, wobei gilt: $u_{m,R1}(t) = S(v(t))\, u_{m,R1}(t)^*$, $v(t) = v(\vec{F}_D(t), \vec{R}(t))$ , $v \in [v_a, v_e]$, mit: $u_{m,R1}^*(t):=$ eine vom ersten Regler R1 ermittelte Stellgröße zur Erzeugung des vorgegebenen Kraftwinders $\vec{F}_D(t)$, $\vec{R}(t) :=$ eine bereitgestellte Regeldifferenz des Reglers **102,** $S(v(t)):=$ eine monoton fallende Funktion von $v(t)$, die anhängig von $\vec{F}_D(t)$ und $\vec{R}(t)$ ist, und $[v_a, v_e]:=$ ein vorgegebener Definitionsbereich der Variable $v(t)$.

**Fig. 6** zeigt einen schematisierten Ablaufplan eines vorgeschlagenen Verfahrens zur Steuerung und Regelung eines von einer Anzahl M Aktoren $AKT_m$ angetriebenen Roboter-Manipulators mit einem Endeffektor, mit m = 1, 2, ..., M. Das Verfahren umfasst folgende Schritte. In einem erste Schritt **201** erfolgt ein Erfassen und/oder Bereitstellen, eines auf den Endeffektor wirkenden externen Kraftwinders $\vec{F}_{ext}(t) = \{\vec{f}_{ext}(t), \vec{\tau}_{ext}(t)\}$, mit: $\vec{f}_{ext}(t):=$ auf den Endeffektor wirkende externe Kraft; $\vec{m}_{ext}(t) :=$ auf den Endeffektor wirkendes externes Drehmoment. In einem zweiten Schritt **202** erfolgt mittels eines Reglers **102,** der einen ersten Regler R1, der ein Kraftregler ist, und einen damit verbundenen zweiten Regler R2 umfasst, der ein Impedanzregler ist, ein Ermitteln von Stellgrößen $u_m(t)$, mit denen die Aktoren $AKT_m$ derart angesteuert werden, dass der Endeffektor bei Kontakt mit einer Oberfläche eines Objekts auf dieses mit einem vorgegebenen Kraftwinder $\vec{F}_D(t) = \{\vec{f}_D(t), \vec{m}_D(t)\}$ einwirkt; wobei gilt: $u_m(t) = u_{m,R1}(t) + u_{m,R2}(t)$, mit: $\vec{f}_D(t) :=$ vorgegebene Kraft; $\vec{m}_D(t) :=$ vorgegebenes Drehmoment, $u_{m,R1}(t):=$ Stellgrößenanteil des ersten Reglers R1, und $u_{m,R2}(t) :=$ Stellgrößenanteil des zweiten Reglers R2, wobei der erste Regler R1 die Stellgröße $u_{m,R1}(t)$ als Produkt einer Stellgröße $u_{m,R1}(t)^*$ und einer Funktion $S(v(t))$ ermittelt, wobei gilt: $u_{m,R1}(t) = S(v(t))\, u_{m,R1}(t)^*$, $v(t) = v(\vec{F}_D(t), \vec{R}(t))$, und $v \in [v_a, v_e]$, mit: $u_{m,R1}^*(t):=$ eine vom ersten Regler R1 ermittelte Stellgröße zur Erzeugung des vorgegebenen Kraftwinders $\vec{F}_D(t)$, $\vec{R}(t):=$ eine bereitgestellte Regeldifferenz des Reglers **102,** $S(v(t)):=$ eine monoton fallende Funktion von $v(t)$, die anhängig von $\vec{F}_D(t)$ und $\vec{R}(t)$ ist, $[v_a, v_e]:=$ ein vorgegebener Definitionsbereich der Variable $v(t)$.

**Patentansprüche**

1. Vorrichtung zur Steuerung und Regelung eines von einer Anzahl M Aktoren $AKT_m$ angetriebenen Roboter-Manipulators mit einem Endeffektor, mit m = 1, 2, ..., M umfassend:

   - eine erste Einheit (101), die einen auf den Endeffektor wirkenden externen Kraftwinder $\vec{F}_{ext}(t) = \{\vec{f}_{ext}(t), \vec{m}_{ext}(t)\}$ erfasst und/oder bereitstellt, mit:

      $\vec{f}_{ext}(t) :=$ auf den Endeffektor wirkende externe Kraft;
      $\vec{m}_{ext}(t) :=$ auf den Endeffektor wirkendes externes Drehmoment;

   - einen mit der ersten Einheit (101) und den Aktoren $AKT_m$ verbundenen Regler (102), der einen ersten Regler R1, der ein Kraftregler ist, und einen damit verbundenen zweiten Regler R2 umfasst, der ein Impedanzregler, ein Admittanzregler, ein Positionsregler, oder ein Geschwindigkeitsregler ist, wobei der Regler (102) Stellgrößen $u_m(t)$ ermittelt, mit denen die Aktoren $AKT_m$ derart ansteuerbar sind, dass der Endeffektor bei Kontakt mit einer Oberfläche eines Objekts auf dieses mit einem vorgegebenen Kraftwinder $\vec{F}_D(t) = \{\vec{f}_D(t), \vec{m}_D(t)\}$ einwirkt; wobei gilt,

$$(1) \qquad u_m(t) = u_{m,R1}(t) + u_{m,R2}(t),$$

mit:

$\vec{f}_D(t) :=$ vorgegebene Kraft;
$\vec{m}_D(t) :=$ vorgegebenes Drehmoment,
$u_{m,R1}(t) :=$ Stellgrößenanteil des ersten Reglers R1, und
$u_{m,R2}(t) :=$ Stellgrößenanteil des zweiten Reglers R2 **dadurch gekennzeichnet, dass** der erste Regler R1 derart ausgeführt und eingerichtet ist, dass die Stellgröße $u_{m,R1}(t)$ als Produkt einer Stellgröße $u_{m,R1}(t)^*$ und einer Funktion $S(v(t))$ ermittelt wird, wobei gilt:

$$(2a) \qquad u_{m,R1}(t) = S(v(t)) \cdot u_{m,R1}(t)^*$$

$$(3a) \qquad v(t) = v(\vec{F}_D(t), \vec{R}(t))$$

$$(4a) \qquad v(t) \in [v_a, v_e]$$

mit:

$u_{m,R1}{}^*(t) :=$ eine vom ersten Regler R1 ermittelte Stellgröße zur Erzeugung des vorgegebenen Kraftwinders $\vec{F}_D(t)$,
$\vec{R}(t) :=$ eine bereitgestellte Regeldifferenz des Reglers (104),
$S(v(t)) :=$ eine monoton fallende Funktion von $v(t)$, die anhängig von $\vec{F}_D(t)$ und $\vec{R}(t)$ ist,
$[v_a, v_e] :=$ ein vorgegebener Definitionsbereich der Variable $v(t)$.

2. Vorrichtung nach Anspruch 1,
bei der für den Fall, dass das Objekt elastisch und dessen Oberfläche flexibel ist, vom Regler (102) bei der Ermittlung der Stellgrößen $u_m(t)$ vorgegebene Elastizitätseigenschaften des Objekts berücksichtigt werden.

3. Vorrichtung nach einem der Ansprüche 1 oder 2,
bei der eine zweite Einheit vorhanden ist, die als Energiespeicher zur Passivierung des Reglers (102) dient, und gemäß einer vorgegebenen Energiespeicherdynamik vom Regler (102) kommende Energie T1 speichert und an den Regler (102) Energie T2 abgibt, wobei die zweite Einheit und der Regler (102) einen geschlossenen Regelkreis bilden, und eine Initialisierung der zweiten Einheit mit einer Energie T0 abhängig von einem ermittelten oder vorgegebenen Energieaufwand $E_{Aufwand}$ zur Durchführung einer aktuellen Aufgabe des Roboter-Manipulators ist.

4. Vorrichtung nach Anspruch 3,
bei der die gespeicherte Energie E eine virtuelle oder eine physikalische Energie ist.

5. Vorrichtung nach Anspruch 3 oder 4,
bei der eine Energieobergrenze G1 definiert ist, und die zweite Einheit derart ausgeführt und eingerichtet ist, dass für die in der zweite Einheit gespeicherte Energie E stets gilt: $E \leq G1$.

6. Vorrichtung nach Anspruch 5,
bei der eine Energieuntergrenze G2 mit $0 < G2 < G1$ definiert ist, und die zweite Einheit derart ausgeführt ist, dass sofern für die in der zweite Einheit gespeicherte Energie E gilt:

- $G2 < E \leq G1$ die zweite Einheit mit dem Regler (102) gekoppelt ist, und

- E ≤ G2, die zweite Einheit vom Regler (102) abgekoppelt ist.

7.  Vorrichtung nach einem der Ansprüche 1 bis 6,
    bei die erste Einheit (101) ein Sensorsystem zur Erfassung des externen Kraftwinders $\vec{F}_{ext}(t) = \{\vec{f}_{ext}(t), \vec{m}_{ext}(t)\}$ und/oder einen Schätzer zur Schätzung des externen Kraftwinders $\vec{F}_{ext}(t) = \{\vec{f}_{ext}(t), \vec{m}_{ext}(t)\}$ aufweist.

8.  Roboter mit einem von einer Anzahl M Aktoren $AKT_m$ angetriebenen Roboter-Manipulator mit einem Endeffektor, der eine Vorrichtung nach einem der Ansprüche 1 bis 7 aufweist, mit m = 1, 2, ..., M.

9.  Verfahren zur Steuerung und Regelung eines von einer Anzahl M Aktoren $AKT_m$ angetriebenen Roboter-Manipulators mit einem Endeffektor, mit m = 1, 2, ..., M, mit folgenden Schritten:

    - Erfassen und/oder Bereitstellen (201), eines auf den Endeffektor wirkenden externen Kraftwinders $\vec{F}_{ext}(t) = \{\vec{f}_{ext}(t), \vec{m}_{ext}(t)\}$, mit:

      $\vec{f}_{ext}(t) :=$ auf den Endeffektor wirkende externe Kraft;
      $\vec{m}_{ext}(t) :=$ auf den Endeffektor wirkendes externes Drehmoment;

    - mittels eines Reglers (102), der einen ersten Regler R1, der ein Kraftregler ist, und einen damit verbundenen zweiten Regler R2 umfasst, der ein Impedanzregler, ein Admittanzregler, ein Positionsregler, oder ein Geschwindigkeitsregler ist, Ermitteln (202) von Stellgrößen $u_m(t)$, mit denen die Aktoren $AKT_m$ derart angesteuert werden, dass der Endeffektor bei Kontakt mit einer Oberfläche eines Objekts auf dieses mit einem vorgegebenen Kraftwinder $\vec{F}_D(t) = \{\vec{f}_D(t), \vec{m}_D(t)\}$ einwirkt; wobei gilt,

    $$(1) \qquad u_m(t) = u_{m,R1}(t) + u_{m,R2}(t),$$

    mit:

    $\vec{f}_D(t) :=$ vorgegebene Kraft;
    $\vec{m}_D(t) :=$ vorgegebenes Drehmoment,
    $u_{m,R1}(t):=$ Stellgrößenanteil des ersten Reglers R1, und
    $u_{m,R2}(t):=$ Stellgrößenanteil des zweiten Reglers R2, **dadurch gekennzeichnet, dass** der erst Regler R1 die Stellgröße $u_{m,R1}(t)$ als Produkt einer Stellgröße $u_{m,R1}(t)^*$ und einer Funktion $S(v(t))$ )) ermittelt, wobei gilt:

    $$(2a) \quad u_{m,R1}(t) = S(v(t)) \cdot u_{m,R1}(t)^*$$

    $$(3a) \quad v(t) = v(\vec{F}_D(t), \vec{R}(t))$$

    $$(4a) \quad v(t) \in [v_a, v_e]$$

    mit:

    $u_{m,R1}{}^*(t):=$ eine vom ersten Regler R1 ermittelte Stellgröße zur Erzeugung des vorgegebenen Kraftwinders $\vec{F}_D(t)$,
    $\vec{R}(t) :=$ eine bereitgestellte Regeldifferenz des Reglers (104),
    $S(v(t)):=$ eine monoton fallende Funktion von $v(t)$, die anhängig von $\vec{F}_D(t)$ und $R(t)$ ist,
    $[v_a, v_e]:=$ ein vorgegebener Definitionsbereich der Variable $v(t)$

10. Verfahren nach Anspruch 9,
    bei dem für den Fall, dass das Objekt elastisch und damit dessen Oberfläche flexibel ist, vom Regler (102) bei der Ermittlung der Stellgrößen $u_m(t)$ vorgegebene Elastizitätseigenschaften des Objekts berücksichtigt werden.

**11.** Verfahren nach einem der Ansprüche 9 oder 10,
bei dem eine zweite Einheit vorhanden ist, die als Energiespeicher zur Passivierung des Reglers (102) dient, und gemäß einer vorgegebenen Energiespeicherdynamik vom Regler (102) kommende Energie T1 speichert und an den Regler (102) Energie T2 abgibt, wobei die zweite Einheit und der Regler (102) einen geschlossenen Regelkreis bilden, und eine Initialisierung der zweiten Einheit mit einer Energie T0 abhängig von einem ermittelten oder vorgegebenen Energieaufwand $E_{Aufwand}$ zur Durchführung einer aktuellen Aufgabe des Roboter-Manipulators ist.

**12.** Computersystem mit einer Datenverarbeitungsvorrichtung, wobei die Datenverarbeitungsvorrichtung derart ausgestaltet ist, eine Vorrichtung nach einem der vorhergehenden Ansprüche 1 - 7 oder einen Roboter nach vorhergehendem Anspruch 8 gemäß des Verfahrens nach einem der vorhergehenden Ansprüche 9 und 10 zu steuern und zu regeln.

**13.** Computer-Programm-Produkt mit einem auf einem maschinenlesbaren Träger gespeicherten Programmcode zur Steuerung und Regelung einer Vorrichtung nach einem der vorhergehenden Ansprüche 1 - 7 oder eines Roboters nach vorhergehendem Anspruch 8, wenn der Programmcode auf einer Datenverarbeitungsvorrichtung ausgeführt wird.

**Claims**

**1.** A device for open-loop and closed-loop control of a robot manipulator driven by a number M of actuators $AKT_m$ having an end effector, with m = 1, 2, ..., M comprising:

- a first unit (101), which detects and/or provides an external torque acting on the end effector $\vec{F}_{ext}(t) = \{\vec{f}_{ext}(t), \vec{m}_{ext}(t)\}$, with:

$\vec{f}_{ext}(t)$: = external force acting on the end effector;
$m_{ext}(t)$: = external torque acting on the end effector;

- a controller (102) connected to the first unit (101) and the actuators $AKT_m$, which comprises a first controller R1, which is a force controller, and a second controller R2 connected thereto, which is an impedance controller, an admittance controller, a position controller or a speed controller, wherein the controller (102) determines manipulated variables $u_m(t)$, with which the actuators $AKT_m$ can be controlled such that the end effector, upon contact with a surface of an object, acts on the latter with a predetermined torque $\vec{F}_D(t) = \{\vec{f}_D(t), \vec{m}_D(t)\}$; wherein the following apply

$$(1) \qquad u_m(t) = u_{m,R1}(t) + u_{m,R2}(t),$$

with:

$\vec{f}_D(t)$: = predetermined force;
$\vec{m}_D(t)$: = predetermined torque;
$u_{m,R1}(t)$: = manipulated variable portion of the first controller R1, and
$u_{m,R2}(t)$: = manipulated variable portion of the second controller R2
**characterized in that** the first controller R1 is designed and set up in such a manner that the manipulated variable $u_{m,R1}(t)$ is determined as a product of a manipulated variable $u_{m,R1}(t)^*$ and a function $S(v(t))$, wherein the following apply:

$$(2a) \quad u_{m,R1}(t) = S(v(t)) \cdot u_{m,R1}(t)^*$$

$$(3a) \quad v(t) = v(\vec{F}_D(t), \vec{R}(t))$$

$$(4a) \quad v(t) \in [v_a, v_e]$$

with:

$u_{m,R1}{}^*(t)$: = a manipulated variable determined by the first controller R1 for producing the predetermined torque $\vec{F}_D(t)$,

$\vec{R}(t)$: = a control difference provided by the controller (104),

$S(v(t))$: =a monotonically decreasing function of $v(t)$, which is dependent on $\vec{F}_D(t)$ and $\vec{R}(t)$,

$[v_a, v_e]$: =a predetermined definition range of the variable $v(t)$.

2. The device according to Claim 1, in which if the object is elastic and its surface flexible, predetermined elasticity properties of the object are taken into account by the controller (102) when determining the manipulated variables $u_m(t)$.

3. The device according to one of Claims 1 or 2, in which a second unit is provided, which serves as an energy storage device for passivation of the controller (102), and stores energy T1 coming from the controller (102) and delivers energy T2 to the controller (102) according to a predetermined energy storage dynamic, wherein the second unit and the controller (102) form a closed loop, and initialisation of the second unit with energy T0 is dependent on a determined or predetermined energy expenditure $E_{expenditure}$ for carrying out a current task of the robot manipulator.

4. The device according to Claim 3, in which the stored energy E is virtual or physical energy.

5. The device according to Claim 3 or 4, in which an energy cap G1 is defined, and the second unit is designed and set up such that the following always applies for the energy E stored in the second unit: $E \leq G1$.

6. The device according to Claim 5, in which an energy lower limit G2 is defined with: $0 < G2 < G1$, and the second unit is designed such that provided that for the energy E stored in the second unit:

   - $G2 < E \leq G1$, the second unit is coupled to the controller (102), and
   - $E \leq G2$, the second unit is disconnected from the controller (102).

7. The device according to one of Claims 1 to 6, in which the first unit (101) has a sensor system for detecting the external torque $\vec{F}_{ext}(t) = \{\vec{f}_{ext}(t), \vec{m}_{ext}(t)\}$ and/or an estimator for estimating the external torque $\vec{F}_{ext}(t) = \{\vec{f}_{ext}(t), \vec{m}_{ext}(t)\}$.

8. A robot with a robot manipulator driven by a number M of actuators $AKT_m$, having an end effector, which has a device according to one of Claims 1 to 7, with m = 1, 2, ..., M.

9. A method for open-loop and closed-loop control of a robot manipulator driven by a number M of actuators $AKT_m$, having an end effector, with m = 1, 2, ..., M, having the following steps:

   - detecting and/or providing (201) an external torque $\vec{F}_{ext}(t) = \{\vec{f}_{ext}(t), \vec{m}_{ext}(t)\}$ acting on the end effector, with:

     $\vec{f}_{ext}(t)$: = external force acting on the end effector;
     $\vec{m}_{ext}(t)$: = external torque acting on the end effector

   - by means of a controller (102), which comprises a first controller R1, which is a force controller, and a second controller R2 connected thereto, which is an impedance controller, an admittance controller, a position controller or a speed controller, determining (202) manipulated variables $u_m(t)$, with which the actuators $AKT_m$ are controlled such that the end effector, upon contact with a surface of an object, acts on the latter with a predetermined torque $\vec{F}_D(t) = \{\vec{f}_D(t), m_D(t)\}$; wherein the following apply

$$(1) \quad u_m(t) = u_{m,R1}(t) + u_{m,R2}(t),$$

with:

$\vec{f}_D$ (t): = predetermined force;

$m_D$ (t) = predetermined torque;

$u_{m,R1}(t)$: = manipulated variable portion of the first controller R1, and

$u_{m,R2}(t)$: = manipulated variable portion of the second controller R2

**characterized in that** the first controller R1 determines the manipulated variable $u_{m,R1}(t)$ as a product of a manipulated variable $u_{m,R1}(t)^*$ and a function S(v(t)), wherein the following apply:

$$(2a) \quad u_{m,R1}(t) = S(v(t)) \cdot u_{m,R1}(t)^*$$

$$(3a) \quad v(t) = v(\vec{F}_D(t), \vec{R}(t))$$

$$(4a) \quad v(t) \in [v_a, v_e]$$

with:

$u_{m,R1}{}^*(t)$: = a manipulated variable determined by the first controller R1 for producing the predetermined torque $\vec{F}_D(t)$,

$\vec{R}(t)$: = a control difference provided by the controller (104),

S(v(t)): =a monotonically decreasing function of v(t), which is dependent on $\vec{F}_D(t)$ and $\vec{R}(t)$,

$[v_a, v_e]$: =a predetermined definition range of the variable v(t).

10. The method according to Claim 9, in which if the object is elastic and its surface flexible, predetermined elasticity properties of the object are taken into account by the controller (102) when determining the manipulated variables $u_m(t)$.

11. The method according to one of Claims 9 or 10, in which a second unit is provided, which serves as an energy storage device for passivation of the controller (102), and stores energy T1 coming from the controller (102) and delivers energy T2 to the controller (102) according to a predetermined energy storage dynamic, wherein the second unit and the controller (102) form a closed loop, and initialisation of the second unit with energy T0 is dependent on a determined or predetermined energy expenditure $E_{expenditure}$ for carrying out a current task of the robot manipulator.

12. A computer system having a data processing device, wherein the data processing device is designed for open-loop and closed-loop control of a device according to one of the preceding Claims 1 - 7 or a robot according to the preceding Claim 8 in accordance with the method according to one of the preceding Claims 9 and 10.

13. A computer program product having a program code stored on a machine-readable carrier for open-loop and closed-loop control of a device according to one of the preceding Claims 1 - 7 or a robot according to the preceding Claim 8 if the program code is executed on a data processing device.

**Revendications**

1. Dispositif, destiné à commander et à réguler un manipulateur de robot entraîné par un nombre M d'actionneurs $AKT_m$, pourvu d'un effecteur terminal, avec m = 1, 2, ..., M comprenant :

- une première unité (101), qui détecte et/ou met à disposition un torseur de force $\vec{F}_{ext}$ (t) = {$\vec{f}_{ext}$ (t), $m_{ext}$ (t)} externe, avec :

$\vec{f}_{ext}$ (t) : = force externe agissant sur l'effecteur terminal ;

$\vec{m}_{ext}$ (t): = couple de rotation agissant sur l'effecteur terminal ;

- un régulateur (102), relié avec la première unité (101) et avec les actionneurs $AKT_m$, qui comprend un premier régulateur R1, qui est un régulateur de force, et un deuxième régulateur R2 relié avec celui-ci, qui est un régulateur d'impédance, un régulateur d'admittance, un régulateur de position ou un régulateur de vitesse, le régulateur (102) déterminant des grandeurs de réglage $U_m(t)$, à l'aide desquelles les actionneurs $AKT_m$ sont susceptibles d'être activés de telle sorte que lors d'un contact avec une surface d'un objet, l'effecteur terminal agisse sur celui-ci avec un torseur de force $\vec{F}_D(t) = \{\vec{f}_D(t), m_D(t)\}$ prédéfini ; étant entendu que

$$(1) \qquad u_m(t) = u_{m,R1}(t) + u_{m,R2}(t),$$

avec :

$\vec{f}_D(t)$: = force prédéfinie ;
$m_D(t)$: = couple de rotation prédéfini ;
$u_{m,R1}(t)$ : = part de grandeurs de réglage du premier régulateur R1, et
$u_{m,R2}(t)$ : = part de grandeurs de réglage du deuxième régulateur R2

le premier régulateur R1 est réalisé et aménagé de telle sorte, que la grandeur de réglage $u_{m,R1}(t)$ soit déterminée en tant qu'un produit d'une grandeur de réglage $u_{m,R1}(t)^*$ et d'une fonction $S(v(t))$, étant entendu que :

$$(2a) \quad u_{m,R1}(t) = S(v(t)) \cdot u_{m,R1}(t)^*$$

$$(3a) \quad v(t) = v(\vec{F}_D(t), \vec{R}(t))$$

$$(4a) \quad v(t) \in [v_a, v_e]$$

avec :

$u_{m,R1}^*(t)$ : = une grandeur de réglage déterminée par le premier régulateur R1, pour la génération du torseur de force $\vec{F}_D(t)$ prédéfini,
$\vec{R}(t)$ : = une différence de régulation mise à disposition du régulateur (104),
$S(v(t))$ : = une fonction décroissant de manière monotone de $v(t)$, qui est dépendante de $\vec{F}_D(t)$ et $\vec{R}(t)$,
$[v_a, v_e]$ : = une plage de définition prédéfinie de la variable $v(t)$.

2. Dispositif selon la revendication 1, avec lequel, dans le cas où l'objet est élastique et sa surface est souple, le régulateur (102) prend en compte, lors de la détermination des grandeurs de réglage $u_m(t)$ des propriétés d'élasticité prédéfinies de l'objet.

3. Dispositif selon l'une quelconque des revendications 1 ou 2, sur lequel est présente une deuxième unité, qui fait office d'accumulateur d'énergie pour la passivation du régulateur (102) et qui accumule de l'énergie T1 provenant du régulateur (102) selon une dynamique prédéfinie d'accumulation énergétique et restitue au régulateur (102) de l'énergie T2, la deuxième unité et le régulateur (102) formant un circuit de régulation fermé, et une initialisation de la deuxième unité avec une énergie T0 dépendant d'une dépense d'énergie $E_{dépense}$ déterminée ou prédéfinie pour la réalisation d'une tâche actuelle du manipulateur de robot.

4. Dispositif selon la revendication 3, sur lequel l'énergie E accumulée est une énergie virtuelle ou une énergie physique.

5. Dispositif selon la revendication 3 ou 4, sur lequel la limite énergétique supérieure G1 est définie, et la deuxième unité est réalisée et aménagée de telle sorte que pour l'énergie E accumulée dans la deuxième unité, il est toujours entendu que : $E \leq G1$.

6. Dispositif selon la revendication 5, sur lequel la limite énergétique inférieure G2 est définie avec : $0 < G2 < G1$, et la deuxième unité est réalisée de telle sorte que si, pour l'énergie E accumulée dans la deuxième unité, il est entendu que :

- G2 < E ≤ G1, la deuxième unité est connectée avec le régulateur (102), et
- E ≤ G2, la deuxième unité est déconnectée du régulateur (102).

7. Dispositif selon l'une quelconque des revendications 1 à 6, sur lequel la première unité (101) comporte un système de capteurs, destiné à détecter le torseur de force $\vec{F}_{\text{ext}}(t) = \{f_{\text{ext}}(t), \vec{m}_{\text{ext}}(t)\}$ externe et/ou un évaluateur, destiné à évaluer le torseur de force $\vec{F}_{\text{ext}}(t) = \{\vec{f}_{\text{ext}}(t), m_{\text{ext}}(t)\}$ externe.

8. Robot, pourvu d'un manipulateur de robot doté d'un nombre M d'actionneurs $AKT_m$ comprenant un effecteur terminal, qui comporte un dispositif selon l'une quelconque des revendications 1 à 7, avec m = 1, 2, ..., M.

9. Procédé, destiné à commander et à réguler un manipulateur de robot entraîné par un nombre M d'actionneurs $AKT_m$, pourvu d'un effecteur terminal, avec m = 1, 2, ..., M, comprenant les étapes suivantes, consistant à :

- détecter et/ou mettre à disposition (201) un torseur de force $\vec{F}_{\text{ext}}(t) = \{\vec{f}_{\text{ext}}(t), \vec{m}_{\text{ext}}(t)\}$ externe, agissant sur l'effecteur terminal, avec :

$\vec{f}_{\text{ext}}(t)$ : = force externe agissant sur l'effecteur terminal ;
$\vec{m}_{\text{ext}}(t)$ : = couple de rotation externe agissant sur l'effecteur terminal.

- au moyen d'un régulateur (102), qui comprend un premier régulateur R1, qui est un régulateur de force et un deuxième régulateur R2 relié avec celui-ci, qui est un régulateur d'impédance, un régulateur d'admittance, un régulateur de position ou un régulateur de vitesse, déterminer (202) des grandeurs de réglage $u_m(t)$, à l'aide desquelles les actionneurs $AKT_m$ sont activés de telle sorte, que lors d'un contact avec une surface d'un objet, l'effecteur terminal agisse sur celui-ci avec un torseur de force $\vec{F}_D(t) = \{\vec{f}_D(t), m_D(t)\}$ prédéfini ; étant entendu que

$$(1) \qquad u_m(t) = u_{m,R1}(t) + u_{m,R2}(t),$$

avec :

$\vec{f}_D(t)$ : = force prédéfinie ;
$\vec{m}_D(t)$ : = couple de rotation prédéfini ;
$u_{m,R1}(t)$ : = part de grandeurs de mesure du premier régulateur R1, et
$u_{m,R2}(t)$ : = part de grandeurs de mesure du deuxième régulateur R2

**caractérisé en ce que** le premier régulateur R1 détermine la grandeur de mesure $U_{m,R1}(t)$ en tant qu'un produit d'une grandeur de mesure $U_{m,R1}(t)^*$ et d'une fonction $S(v(t))$, étant entendu que :

$$(2a) \qquad u_{m,R1}(t) = S(v(t)) \cdot u_{m,R1}(t)^*$$

$$(3a) \qquad v(t) = v(\vec{F}_D(t), \vec{R}(t))$$

$$(4a) \qquad v(t) \in [v_a, v_e]$$

avec :

$u_{m,R1}{}^*(t)$ : = une grandeur de mesure déterminée par le premier régulateur R1, pour la génération du torseur de force $\vec{F}_D(t)$ prédéfini,
$\vec{R}(t)$ : = une différence de régulation mise à disposition du régulateur (104),
$S(v(t))$ : = une fonction décroissant de manière monotone de $v(t)$, qui est dépendante de $\vec{F}_D(t)$ et $\vec{R}(t)$,
$[v_a, v_e]$ : = une plage de définition prédéfinie de la variable $v(t)$.

10. Procédé selon la revendication 9, lors duquel, dans le cas où l'objet est élastique et sa surface est souple, le régulateur (102) prend en compte, lors de la détermination des grandeurs de réglage $u_m(t)$ des propriétés d'élasticité prédéfinies de l'objet.

11. Procédé selon l'une quelconque des revendications 9 ou 10, lors duquel est présente une deuxième unité, qui fait office d'accumulateur d'énergie pour la passivation du régulateur (102) et qui accumule de l'énergie T1 provenant du régulateur (102) selon une dynamique prédéfinie d'accumulation énergétique et restitue au régulateur (102) de l'énergie T2, la deuxième unité et le régulateur (102) formant un circuit de régulation fermé, et une initialisation de la deuxième unité avec une énergie T0 dépendant d'une dépense d'énergie $E_{dépense}$ déterminée ou prédéfinie pour la réalisation d'une tâche actuelle du manipulateur de robot.

12. Système informatique, doté d'un dispositif de traitement des données, le dispositif de traitement des données étant conçu de sorte à commander et à réguler un dispositif selon l'une quelconque des revendications 1 à 7 précédentes ou un robot selon la revendication 8 précédente, conformément au procédé selon l'une quelconque des revendications 9 et 10 précédentes.

13. Produit de programme informatique, comprenant un code programme mémorisé sur un support lisible par machine, pour la commande et la régulation d'un dispositif selon l'une quelconque des revendications 1 à 7 précédentes ou d'un robot selon la revendication 8 précédente, lorsque le code programme est exécuté sur un dispositif de traitement des données.

EP 3 261 808 B1

# Fig. 1a

Impedanzregelung

# Fig. 1b

Kraftregelung

Kraft- + Impedanzregelung

## Fig. 1c

Umgebung

Passiver Block

Energietank

Kraft/
Impedanzregler

Motordynamik

Starrkörperdynamik

Passiver Block IV

Passiver Block I

## Fig. 2

Fig. 3a                    Fig. 3b

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **M. H. RAIBERT ; J. J. CRAIG.** Hybrid Position/Force Control of Manipulators. *Journal of Dynamic Systems, Measurement and Control,* 1981
- **ALBU-SCHÄFFER ; OTT ; HIRZINGER.** *A Unified Passivity-based Control Framework for Position, Torque and Impedance Control of Flexible Joint Robots,* 2007
- **ALBU-SCHÄFFER, A. ; FISCHER, M. ; SCHREIBER, G. ; SCHOEPPE, F. ; HIRZINGER, G.** Soft robotics: What Cartesian stiffness can obtain with passively compliant, uncoupled joints. *IROS,* 2004
- **ALBU-SCHÄFFER, A. ; OTT, C. ; HIRZINGER, G.** A Unified Passivity-based Control Framework for Position, Torque and Impedance Control of Flexible Joint Robots. *The Int. J. of Robotics Research,* 2007, 23-39
- **ANTONIO LOPES et al.** A force-impedance controlled industrial robot using an active robotic auxiliary device. *ROBOTICS AND COMPUTER INTEGRATED MANUFACTURING,* 01. Juni 2008, vol. 24 (3
- **BORGHESAN, G. ; DE SCHUTTER, J.** Constraint-based specification of hybrid position-impedance-force tasks. *IEEE International Conference on Robotics and Automation 2014 (ICRA2014),* 2014
- Interconnection of port-Hamiltonian systems and composition of Dirac structures. **CERVERA, J. ; VAN DER SCHAFT, A. ; BANOS, A.** Automatica. Elsevier, 2007, 212-225
- **DUFFY, J.** The fallacy of modern hybrid control theory that is based on orthogonal complements of twist and wrench spaces. Wiley Online Library, 1990, 139-144
- **DUINDAM, V. ; STRAMIGIOLI, S.** Port-based asymptotic curve tracking for mechanical systems. Elsevier, 2004, 411-420

- **HADDADIN, S.** Towards Safe Robots: Approaching Asimov's 1st Law. Springer Publishing Company, Incorporated, 2013
- Collision detection and reaction: A contribution to safe physical human-robot interaction. **HADDADIN, S. ; ALBU-SCHÄFFER, A. ; DE LUCA, A. ; HIRZINGER, G.** Intelligent Robots and Systems. IEEE, 2008, 3356-3363
- **HOGAN, N.** Impedance Control: An approach to manipulation: Part I -Theory, Part II - Implementation, Part III - Applications. *ASME Journal of Dynamic Systems, Measurement, and Control,* 1985, 1-24
- Passive-set-position-modulation framework for interactive robotic systems. **LEE, D. ; HUANG, K.** IEEE Transactions on Robotics. IEEE, 2010, 354-369
- **LUTSCHER, E. ; CHENG, G.** Constrained Manipulation in Unstructured Environment Utilizing Hierarchical Task Specification for Indirect Force Controlled Robots. *IEEE International Conference on Robotics and Automation 2014 (ICRA2014),* 2014
- **RAIBERT, M. H. ; CRAIG, J. J.** Hybrid position/force control of manipulators. *ASME Journal of Dynamical Systems, Measurement and Control,* 1981, 126-133
- **SPONG, M.** Modeling and Control of Elastic Joint Robots. *ASME J. on Dynamic Systems, Measurement, and Control,* 1987, 310-319
- **SIMEON P. PATARINSKI et al.** Robot force control: A review. *MECHANTRONICS,* 01. August 1993, vol. 3 (4), 377-398
- Force Control. **VILLANI, L. ; DE SCHUTTER, J. ; O. KHATIB.** Springer Handbook of Robotics. Springer, 2008, 161-185
- An overview of robot force control. **ZENG, G. ; HEMAMI, A.** Robotica. Cambridge Univ Press, 1997, 473-482